# FASCICULE DE BREVET EUROPEEN

(11) **EP 1 593 565 B1**
(45) Date de publication et mention de la délivrance du brevet: **07.03.2007**
(21) Numéro de dépôt: 05300318.2
(22) Date de dépôt: 26.04.2005
(51) Int. Cl.: B60S 1/54

(54) **Dispositif de lavage de la vitre de custode arrière d'un vehicule automobile**
Waschvorrichtung für eine Hinterfahrzeugscheibe
Washing device for a rear glass pane in a motor vehicle

(30) Priorité: 06.05.2004 FR 0450873
(43) Date de publication de la demande: 09.11.2005
(73) Titulaire: Peugeot Citroen Automobiles SA, 78943 Vélizy-Villacoublay Cedex (FR)
(72) Inventeur: Besson, Jack, 78200, MANTES LA JOLIE (FR)
(74) Mandataire: Fernandez, Francis Lionel

(56) Documents cités:
- FR-A- 2 681 033
- FR-A- 2 705 075
- US-A1- 2001 035 662
- PATENT ABSTRACTS OF JAPAN vol. 1997, no. 08, 29 août 1997 (1997-08-29) & JP 09 099816 A (HINO MOTORS LTD), 15 avril 1997 (1997-04-15)

## Description

La présente invention est relative à un dispositif pour le lavage de la vitre arrière d'un véhicule automobile.

Les véhicules de tout type comportent désormais, de façon usuelle et quelle que soit la qualité de leurs équipements, au moins un gicleur associé à un balai d'essuie-glace pour effectuer le lavage et le nettoyage commandés de la vitre de la custode arrière de la carrosserie, notamment pour permettre, à l'aide de ce balai frottant sur cette vitre de chasser les poussières, boues ou autres dépôts qui ont pu s'y déposer et qui gênent en conséquence la vision du conducteur regardant la zone située derrière son véhicule, à travers ses rétroviseurs.

Dans l'état de la technique, nous connaissons le brevet FR 2 681 033, qui décrit un dispositif de lavage d'une lunette arrière comprenant un bras d'essuie-glace relié à un arbre d'entraînement lui-même monté concentriquement sur un axe d'alimentation d'un gicleur. Le dit gicleur est monté déplaçable dans une position escamotée à proximité de l'extrémité de l'arbre et une position active de lavage, en saillie, obtenue par un système de vérin actionné sous la pression du fluide de lavage.

On peut également faire référence à des réalisations où le lavage de la vitre est uniquement obtenu à l'aide d'au moins un gicleur à haute pression, sans mise en oeuvre simultanée d'un balai d'essuie-glace, dont le jet est convenablement orienté vers la vitre à nettoyer, ce gicleur pouvant être monté sur la carrosserie dans une position fixe ou être porté par un mécanisme qui assure son ou être porté par un mécanisme qui assure son déplacement latéral alternatif au dessus de la vitre.

Dans tous les cas, ce gicleur est relié à une réserve d'eau, généralement logée dans le coffre ou dans le compartiment moteur sous le capot du véhicule, par une canalisation où cette eau circule sous l'effet d'une pompe électromagnétique, afin d'être mise sous une pression suffisante pour être pulvérisée et projetée sur la vitre, ce gicleur étant monté sur la carrosserie à proximité immédiate de cette dernière.

La commande de l'arrivée d'eau au gicleur actionne de façon simultanée la mise en oeuvre du balai d'essuie-glace qui se déplace au contact de la vitre selon un mouvement oscillant ou quelquefois linéaire ou encore, en l'absence de ce balai, la projection directe de l'eau sous haute pression.

Or, cet agencement du gicleur et le cas échéant de son balai d'essuie-glace, classique, n'a pas toujours une efficacité suffisante, notamment en cas de dépôts ou salissures nombreuses et fortement attachées à la vitre, qui sont difficiles à éliminer sans grattage ou autre action mécanique dépassant les capacités propres du balai ou du gicleur lui-même, ou encore en cas de vitre particulièrement encrassée, nécessitant que le gicleur délivre des quantités d'eau importantes qui épuisent rapidement le contenu de la réserve d'approvisionnement.

La présente invention vise un perfectionnement apporté à un gicleur classique de ce genre, permettant d'améliorer considérablement ses capacités de nettoyage de la vitre arrière du véhicule automobile en améliorant l'effet de la projection d'eau pulvérisée provenant de ce gicleur et le résultat obtenu, grâce à un balayage simultané avec de l'air sous pression projeté sur la vitre, n'exigeant la mise en oeuvre d'aucun moyen de soufflage particulier pour produire cette opération.

On sait par ailleurs que certains modèles de véhicules, comportent un accessoire dénommé becquet, apte à être monté transversalement à l'arrière de la carrosserie du véhicule, sur le pavillon du coffre mais également sur l'habitacle au-dessus de la vitre de custode arrière, ce becquet agissant sur l'écoulement de l'air extérieur suivant le profil de la carrosserie lorsque le véhicule est en mouvement, en modifiant les forces de portance qui s'exercent sur ce dernier et en induisant une composante verticale au droit et en aval de ce becquet, qui améliore l'application du véhicule sur le sol, surtout à vitesse élevée, et améliore sensiblement ainsi sa tenue de route.

Ce becquet, qui a usuellement la forme d'un aileron allongé transversalement et effilé vers l'arrière, peut ainsi s'étendre au-dessus de la vitre et donc du gicleur prévu au voisinage de la custode, tout en étant indépendant du balai d'essuie-glace associé au gicleur, son rôle se bornant à délivrer un flux d'air en écoulement vers et sur l'habitacle du véhicule.

On a enfin déjà envisagé de monter les gicleurs de nettoyage de la vitre de custode arrière sur un tel becquet, de manière à ce qu'ils ne créent pas de turbulences dans l'écoulement d'air au contact de la partie correspondante de la carrosserie, en ne perturbant pas le fonctionnement aérodynamique du becquet. Une disposition de ce genre est notamment décrite et revendiquée dans le brevet français FR-A-2 666 776 au nom des Demanderesses.

La présente invention concerne un dispositif perfectionné qui consiste à mettre à profit la présence du becquet monté au-dessus de la vitre de la custode arrière du véhicule pour fournir au voisinage du gicleur un flux d'air de balayage, dirigé vers la vitre et en s'écoulant de haut en bas sur celle-ci, ce flux d'air, en combinant ses effets avec la projection de l'eau de lavage et le contact avec le balai, améliorant l'efficacité du nettoyage obtenu.

A cet effet, le dispositif selon l'invention, comportant,d'une part au moins un gicleur (19) alimenté par de l'eau de lavage sous pression pour pulvériser celle-ci au-dessus et au contact de la vitre, d'autre part un becquet aérodynamique (5), disposé transversalement à la vitre, qui peut être fixé sur la carrosserie et s'étendant au-dessus du gicleur, ou le becquet (5), de forme générale légèrement effilée vers l'arrière, comporte un corps creux, caractérisé en ce que le corps creux est composé par deux parties (8,9) disposées dans le prolongement et en contact l'une avec l'autre, dont la première (8) est solidaire de la carrosserie (2) et la seconde (9) est montée mobile sensiblement dans son plan vers l'arrière par rapport à la première pour ménager entre les deux parties une fente transversale (11) où l'air extérieur qui s'écoule au contact du becquet lorsque le véhicule est en mouvement, est aspiré pour se déplacer au contact de la vitre, la seconde partie mobile (9) du becquet supportant le gicleur (19) étant reliée à la première partie fixe par un conduit d'alimentation (22) en eau de lavage, extensible, propre à contrôler et accommoder le déplacement relatif des deux parties crée par la pression de l'eau admise dans ce conduit.

Dans un mode de réalisation préféré de l'invention, la seconde partie mobile du becquet se déplace vis-à-vis de la première partie fixe au moyen de deux glissières de coulissement, montées respectivement entre les deux parties dans leurs côtés latéraux en regard.

De préférence, les glissières de coulissement sont des glissières à billes, autorisant le déplacement de la partie mobile du becquet sous la pression de l'eau de lavage avec un frottement minimal.

Selon une caractéristique complémentaire, les deux parties du becquet sont reliées par des ressorts propres à rappeler la partie mobile au contact de la partie fixe en assurant la continuité du becquet lorsque le gicleur n'est plus alimenté par l'eau de lavage sous pression.

Avantageusement, le becquet comporte deux ressorts parallèles, identiques, disposés selon les côtés latéraux des deux parties au voisinage des glissières de coulissement.

Selon une autre caractéristique, la partie fixe du becquet comporte un logement creux, ouvert vers l'extérieur et dans lequel est enfermé le conduit d'alimentation extensible lorsque les deux parties du becquet sont en contact.

Selon une variante de réalisation, le dispositif comporte une pluralité de gicleurs indépendants, répartis selon la dimension transversale de la seconde partie du becquet, ces gicleurs étant réunis par une rampe de distribution commune, reliée au conduit d'alimentation souple et extensible.

Selon une autre caractéristique, les deux parties du becquet comportent, au droit de la fente transversale, des moyens d'emboîtement mutuel pour permettre la continuité de ce becquet en l'absence d'alimentation du gicleur par l'eau de lavage.

Selon le cas, le conduit d'alimentation expansible comporte un soufflet ou un vérin hydraulique pour contrôler et accommoder l'écartement des deux parties du becquet.

D'autres caractéristiques d'un dispositif de lavage perfectionné établi conformément à l'invention, apparaîtront encore à travers la description qui suit d'un exemple de réalisation et de diverses variantes de celui-ci, donnés à titre indicatif et non limitatif, en référence aux dessins annexés sur lesquels :
- La Figure 1 est une vue en coupe longitudinale du becquet arrière d'un véhicule automobile, établi conformément à l'invention pour améliorer le lavage de la vitre de custode arrière de celui-ci.
- La Figure 1a, illustre le détail d'une variante des moyens mis en oeuvre pour assurer la projection de l'eau sur la vitre.
- La Figure 2 est une vue partielle de dessus du becquet de la Figure 1.
- La Figure 3 est un schéma des deux parties du becquet de la Figure 2, vues selon la direction de la flèche A.
- Les Figures 4 et 5 sont d'autres schémas illustrant deux variantes de réalisation du becquet conforme aux Figures 1 à 3.

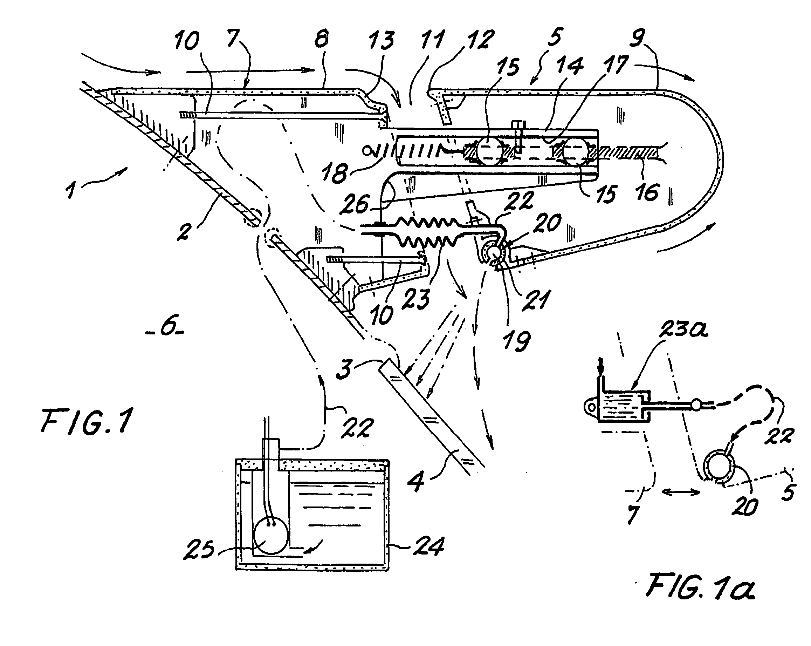

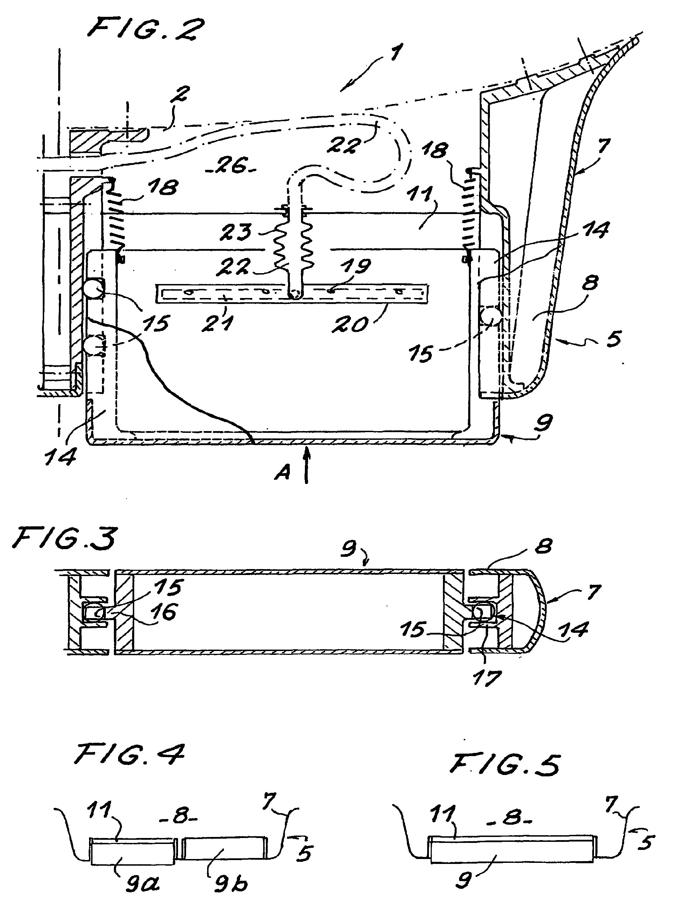

Sur les Figures 1 et 2, la référence 1 désigne dans son ensemble le dispositif selon l'invention, propre à être monté sur la partie arrière de la carrosserie 2 d'un véhicule automobile dont la forme comme la structure n'importent pas directement à l'invention.

La carrosserie 2 comporte de façon classique une custode de lunette arrière 3 recevant une vitre 4 contre la surface extérieure de laquelle porte un balai d'essuie-glace (non représenté) propre à assurer le nettoyage de cette vitre lorsqu'il est animé d'un mouvement généralement oscillant, parfois linéaire en va-et-vient contre la vitre.

La carrosserie 2 du véhicule est par ailleurs équipée d'un becquet aérodynamique 5, monté à l'extérieur de l'habitacle 6, ce becquet se présentant de façon connue sous la forme d'un aileron comportant un corps creux 7, allongé, monté au-dessus de la custode 3 et de la vitre 4 reçue dans celle-ci, ce becquet 5 étant disposé transversalement par rapport au sens de déplacement du véhicule et présentant une forme générale légèrement effilée vers l'arrière de celui-ci afin de canaliser les filets d'air qui s'écoulent contre sa surface extérieure et de créer sur la carrosserie une force de portance avec une composante dirigée vers le bas qui améliore la tenue de route de ce véhicule.

Conformément à l'invention, le corps creux 7 du becquet 5 est constitué de deux parties accolées, respectivement 8 et 9, disposées dans le prolongement l'une de l'autre, la première partie 8 étant immobilisée contre la carrosserie 2 à l'aide de vis de fixation 10 ou autre moyen analogue, tandis que la seconde partie 9 est mobile par rapport à la première et susceptible de s'écarter légèrement de celle-ci pour délimiter entre elles une fente transversale 11.

Avantageusement, lorsque les deux parties 8 et 9 du becquet 5 sont accolées l'une à l'autre, elles s'emboîtent légèrement ensemble pour ne pas rompre la continuité du becquet, la partie mobile 9 pouvant à cet effet comporter une nervure en saillie 12 venant se loger dans un évidement 13 de même profil de la partie fixe 8.

La Figure 2 illustre plus particulièrement les moyens mis en oeuvre pour permettre de déplacer la partie mobile 9 du corps 7 vis-à-vis de la partie fixe 8 afin de créer entre elles la fente 11.

Dans l'exemple de réalisation considéré sur cette figure, la partie mobile 9 du becquet 5 est en réalité constituée de deux éléments distincts, respectivement 9a et 9b comme montré sur le schéma de la Figure 4, ces deux éléments étant identiques et pouvant de façon simultanée être disposés au contact de la partie fixe 8 pour assurer la continuité du becquet, ou bien être écartés ensemble de cette partie fixe pour délimiter au droit de chacun de ces éléments la fente 11 précitée.

Dans la variante schématiquement représentée sur la Figure 5, la partie mobile 9 s'étend sur pratiquement toute la largeur du becquet 5 dans le sens transversal, et correspond en conséquence sensiblement au double de la longueur des deux parties mobiles 9a et 9b envisagées dans le cas précédent.

Le déplacement de la partie mobile 9 du corps 7 vis-à-vis de la partie fixe 8 du becquet 5 s'effectue en ménageant sur chacun de deux côtés latéraux de cette partie mobile des glissières de coulissement 14, permettant, consécutivement à un effort vers l'arrière exercé sur la partie mobile, de l'écarter de la partie fixe avec un frottement minimal et de créer la fente 11.

Avantageusement, les glissières 14 sont des glissières à billes 15, dont la structure n'importe pas directement à l'invention, ces billes pouvant en particulier être portées par des nervures transversales 16 faisant saillie de chaque côté de la partie mobile 9 et s'engageant dans des rainures latérales 17 de la partie fixe 8.

Les glissières 14 sont par ailleurs respectivement associées à deux ressorts de rappel 18, chacun d'eux ayant une extrémité solidarisée de la partie fixe 8 et l'autre extrémité reliée à la partie mobile 9, ces deux ressorts 18, de préférence identiques l'un à l'autre, ayant pour effet d'exercer en permanence une force de rappel sur la partie mobile 9 pour venir emboîter celle-ci contre la partie fixe 8 en éliminant la fente 11, cette dernière n'apparaissant que consécutivement à un effort en sens inverse exercé sur la partie mobile, déplaçant celle-ci vers l'arrière à l'intérieur de ses glissières.

La partie mobile 9 du becquet 5 comporte au moins un et de préférence une pluralité de gicleurs 19 de distribution d'eau de lavage sur la vitre 4 pour permettre de projeter cette eau sur cette vitre et en combinaison avec l'effet du balai d'essuie-glace, d'en assurer le nettoyage.

Avantageusement, le dispositif comporte plusieurs gicleurs de ce type, au nombre de quatre dans l'exemple représenté (voir Figure 2), répartis selon la longueur d'une rampe transversale commune 20, comportant une canalisation interne 21 de distribution d'eau.

La canalisation 21 de la rampe 20 est raccordée dans la variante d'exécution représentée à un conduit d'alimentation 22, réalisé en un matériau souple et extensible, comportant notamment un soufflet 23, permettant d'accommoder le déplacement relatif de la partie mobile 9 du becquet 5 vis-à-vis de la partie fixe 8 lors de la formation de la fente 11 entre ces deux parties.

En variante de réalisation, le conduit d'alimentation 22 alimente un petit vérin hydraulique 23a (voir Figure 1a), qui de façon similaire provoque et contrôle l'écartement des parties 8 et 9 du becquet 5 pour créer la fente 11 et l'afflux d'air sur la vitre 4.

Dans l'un ou l'autre mode d'exécution, le conduit 22 traverse la partie fixe 8 du becquet 5 pour être relié à son extrémité opposée à une réserve d'eau de lavage 24 (Figure 1), usuellement logée dans le coffre du véhicule ou de préférence sous le capot du compartiment moteur de celui-ci, cette réserve 24 comportant une pompe électromagnétique 25 permettant d'aspirer l'eau qu'elle contient et de la refouler sous pression appropriée dans le conduit 22 afin de la délivrer aux gicleurs 19 montés dans la partie mobile 9 du becquet.

La pression de l'eau ainsi fournie aux gicleurs 19 de la rampe 20, crée sur la partie mobile 9 qui porte cette dernière un effort dirigé vers l'arrière du véhicule qui provoque le déplacement de cette partie mobile sur ses glissières 14 à l'encontre des ressorts de rappel 18, en découvrant la fente 11 entre les deux parties du becquet 5, sur une largeur définie lorsque la poussée due à l'eau sous pression dans le conduit 22 équilibre la force antagoniste de ces ressorts.

L'eau sous pression délivrée par les gicleurs se répand alors sur la vitre 4 afin de permettre, en combinaison avec l'effet du balai d'essuie-glace le nettoyage de cette vitre d'une façon qui est en soi bien connue.

L'invention permet donc de superposer à l'action du balai et de l'eau de lavage fournie par les gicleurs, une action de nettoyage complémentaire grâce au balayage de la vitre 4 par le flux d'air créé par le becquet 5 consécutivement au déplacement du véhicule, les filets d'air qui s'écoulent à grande vitesse sur la surface extérieure du becquet pouvant ainsi être aspirés et s'engouffrer dans la fente 11 et, au-delà de celle-ci, venir frapper la vitre en améliorant de façon particulièrement efficace l'action de nettoyage réalisée.

Lorsque la pompe 25 est mise hors circuit, les gicleurs 19 de la rampe 20 n'étant plus alimentés en eau de lavage, les ressorts 18 rappellent la partie mobile 9 qui reprend sa position initiale en s'emboîtant dans la partie fixe 8 et en assurant à nouveau la continuité du becquet sans prise d'air parasite sur celui-ci.

Au cours de cette opération, le soufflet 23 de la canalisation souple 22 se comprime sur lui-même, permettant de l'enfermer dans un logement creux 26, ouvert vers l'extérieur, prévu dans la partie fixe 8 (Figure 1) . Avec le vérin 23a, celui-ci se rétracte en réalisant de façon analogue la mise en contact des deux parties du becquet et la suppression de la fente créée entre de celles-ci.

On réalise ainsi un dispositif perfectionné permettant le lavage de la vitre de la custode arrière prévue dans l'habitacle d'un véhicule automobile, où la commande des gicleurs délivrant l'eau de nettoyage assure directement l'écartement des deux parties du becquet, la mise hors service de cette commande permettant automatiquement de restaurer les propriétés aérodynamiques du becquet, momentanément altérées par la création de la fente ménagée temporairement entre ces deux parties.

Bien entendu, il va de soi que l'invention ne se limite pas aux exemples plus spécialement décrits et représentés en référence aux dessins annexés ; elle embrasse toutes les variantes comprises par les revendications.

## Revendications

1. - Dispositif de lavage de la vitre (4) de la custode arrière (3) pouvant être ménagée dans la carrosserie (2) d'un véhicule automobile, comportant, d'une part au moins un gicleur (19) alimenté par de l'eau de lavage sous pression pour pulvériser celle-ci au-dessus et au contact de la vitre, d'autre part un becquet aérodynamique (5), disposé transversalement à la vitre, qui peut être fixé sur la carrosserie et s'étendant au-dessus du gicleur, ou le becquet (5), de forme générale légèrement effilée vers l'arrière, comporte un corps creux, **caractérisé en ce que** le corps creux est composé par deux parties (8,9)disposées dans le prolongement et en contact l'une avec l'autre, dont la première (8) est solidaire de la carrosserie (2) et la seconde (9) est montée mobile sensiblement dans son plan vers l'arrière par rapport à la première pour ménager entre les deux parties une fente transversale (11) où l'air extérieur qui s'écoule au contact du becquet lorsque le véhicule est en mouvement, est aspiré pour se déplacer au contact de la vitre, la seconde partie mobile (9) du becquet supportant le gicleur (19) étant reliée à la première partie fixe par un conduit d'alimentation (22) en eau de lavage, extensible, propre à contrôler et accommoder le déplacement relatif des deux parties crée par la pression de l'eau admise dans ce conduit.

2. - Dispositif de lavage selon la revendication 1, **caractérisé en ce que** la seconde partie mobile (9) du becquet (5) se déplace vis-à-vis de la première partie fixe (8) au moyen de deux glissières de coulissement (14), montées respectivement entre les deux parties dans leurs côtés latéraux en regard.

3. - Dispositif de lavage selon la revendication 2, **caractérisé en ce que** les glissières de coulissement (14) sont des glissières à billes (15), autorisant le déplacement de la partie mobile (9) du becquet sous la pression de l'eau de lavage avec un frottement minimal.

4. - Dispositif de lavage selon l'une quelconque des revendications 1 à 3, **caractérisé en ce que** les deux parties (8,9) du becquet sont reliées par des ressorts (18) propres à rappeler la partie mobile au contact de la partie fixe en assurant la continuité du becquet lorsque le gicleur (19) n'est plus alimenté par l'eau de lavage sous pression.

5. - Dispositif de lavage selon la revendication 4, **caractérisé en ce que** le becquet (5) comporte deux ressorts (18) parallèles, identiques, disposés selon les côtés latéraux des deux parties (8,9) au voisinage des glissières de coulissement (14).

6. - Dispositif de lavage selon l'une quelconque des revendications 1 à 5, **caractérisé en ce que** la partie fixe (8) du becquet (5) comporte un logement creux (26), ouvert vers l'extérieur et dans lequel est enfermé le conduit d'alimentation (22) extensible, lorsque les deux parties du becquet sont en contact.

7. - Dispositif de lavage selon l'une quelconque des revendications 1 à 6, **caractérisé en ce qu'**il comporte une pluralité de gicleurs indépendants (19), répartis selon la dimension transversale de la partie mobile (9) du becquet, ces gicleurs étant réunis par une rampe de distribution (20) commune, reliée au conduit d'alimentation extensible (22).

8. - Dispositif de lavage selon l'une quelconque des revendications 1 à 7, **caractérisé en ce que** les deux parties (8,9) du becquet (5) comportent, au droit de la fente transversale, des moyens d'emboîtement mutuel (12,13) pour permettre la continuité de ce becquet en l'absence d'alimentation du gicleur par l'eau de lavage.

9. - Dispositif de lavage selon l'une quelconque des revendications 1 à 8, **caractérisé en ce que** le conduit d'alimentation extensible (22) comporte un soufflet (23).

10. - Dispositif de lavage selon l'une quelconque des revendications 1 à 8, **caractérisé en ce que** le conduit d'alimentation extensible (22) comporte un vérin hydraulique (23a).

## Claims

1. Device for washing the pane (4) of the rear quarter panel (3), which can be made in the body (2) of a motor vehicle, comprising, on the one hand, at least one jet nozzle (19) supplied with pressurised washing water in order to spray said water over and in contact with the pane, on the other hand an aerodynamic spoiler (5), positioned transverse to the pane, fixed to the body and extending above the jet nozzle, where the spoiler (5), with a general shape slightly tapered towards the rear, comprises a hollow body, **characterised in that** the hollow body is composed of two portions (8, 9) arranged as extensions of and in contact with one another, the first (8) of which is integral with the body (2) and the second (9) of which is mounted so as to be mobile substantially in its plane towards the rear relative to the first in order to produce, between the two portions, a transverse slot (11) where the outside air that flows in contact with the spoiler when the vehicle is moving, is sucked in and displaced in contact with the pane, the second mobile portion (9) of the spoiler supporting the jet nozzle (19) being connected to the first, fixed portion by an extensible pipe (22) for supplying washing water, suitable for controlling and adjusting the relative displacement of the two portions created by the pressure of water entering this pipe.

2. Washing device according to Claim 1, **characterised in that** the second mobile portion (9) of the spoiler (5) is displaced relative to the first fixed portion (8) by means of two sliding runners (14), mounted respectively between the two portions in their facing lateral sides.

3. Washing device according to Claim 2, **characterised in that** the sliding runners (14) are ball-bearing runners (15), allowing the mobile portion (9) of the spoiler to be displaced under the pressure of the washing water with minimal friction.

4. Washing device according to any one of Claims 1 to 3, **characterised in that** the two portions (8, 9) of the spoiler are connected by springs (18) suitable for returning the mobile portion into contact with the fixed portion, ensuring the continuity of the spoiler when the jet nozzle (19) is no longer supplied with pressurised washing water.

5. Washing device according to Claim 4, **characterised in that** the spoiler (5) comprises two identical parallel springs (18), positioned along the lateral sides of the two portions (8, 9) in the vicinity of the sliding runners (14).

6. Washing device according to any one of Claims 1 to 5, **characterised in that** the fixed portion (8) of the spoiler (5) comprises a hollow housing (26), opening outwards and enclosing the extensible supply pipe (22), when the two portions of the spoiler are in contact.

7. Washing device according to any one of Claims 1 to 6, **characterised in that** it comprises a plurality of independent jet nozzles (19), distributed according to the transverse dimension of the mobile portion (9) of the spoiler, these jet nozzles being joined together by a common ramp for distribution (20), connected to the extensible supply pipe (22).

8. Washing device according to any one of Claims 1 to 7, **characterised in that** the two portions (8, 9) of the spoiler (5) comprise, in line with the transverse slot, mutual joint means (12, 13) to allow the continuity of this spoiler when the jet nozzle is not being supplied with washing water.

9. Washing device according to any one of Claims 1 to 8, **characterised in that** the extensible supply pipe (22) comprises a bellows (23).

10. Washing device according to any one of Claims 1 to 8, **characterised in that** the extensible supply pipe (22) comprises a hydraulic jack (23a).

## Patentansprüche

1. Waschvorrichtung für die Scheibe (4) des hinteren Fensters (3), die in der Karosserie (2) eines Kraftfahrzeugs angeordnet sein kann und zum einen mindestens eine Düse (19) aufweist, die mit Waschwasser unter Druck versorgt wird und dieses über und in Kontakt mit der Scheibe zerstäubt, und zum anderen quer zur Scheibe einen aerodynamischen Spoiler (5), der an der Karosserie befestigt sein und sich oberhalb der Düse erstrecken kann, wobei der Spoiler (5), der die allgemeine Form einer leichten Verjüngung nach hinten aufweist, einen hohlen Körper umfasst, **dadurch gekennzeichnet, dass** der hohle Körper aus zwei Abschnitten (8, 9) besteht, die in Verlängerung und in Kontakt miteinander angeordnet sind und von denen der erste Abschnitt (8) mit der Karosserie (2) fest verbunden und der zweite Abschnitt (9) gegenüber dem ersten Abschnitt im Wesentlichen in seiner Ebene nach hinten beweglich montiert ist, sodass zwischen den beiden Abschnitten ein Querschlitz (11) entstehen kann, in dem die Außenluft, die im Kontakt mit dem Spoiler fließt, wenn das Fahrzeug in Bewegung ist, angesaugt wird, um sich in Kontakt mit der Scheibe zu bewegen, wobei der zweite, bewegliche Abschnitt (9) des Spoilers, der die Düse (19) trägt, mit dem festen, ersten Abschnitt über eine dehnbare Leitung (22) zur Versorgung mit Waschwasser verbunden ist, welche die relative Bewegung der beiden Abschnitte kontrollieren und anpassen kann, die durch den Druck des in die Leitung gelassenen Wassers erzeugt wird.

2. Waschvorrichtung nach Anspruch 1, **dadurch gekennzeichnet, dass** sich der bewegliche zweite Abschnitt (9) des Spoilers (5) gegenüber dem festen ersten Abschnitt (8) mithilfe von zwei Führungen (14) bewegt, die zwischen den beiden Abschnitten in deren einander zugewandten Seiten montiert sind.

3. Waschvorrichtung nach Anspruch 2, **dadurch gekennzeichnet, dass** die Führungen (14) Kugelführungen (15) sind, die die Bewegung des beweglichen Abschnitts (9) des Spoilers unter dem Druck des Waschwassers mit minimaler Reibung ermöglichen.

4. Waschvorrichtung nach einem der Ansprüche 1 bis 3, **dadurch gekennzeichnet, dass** die beiden Abschnitte (8, 9) des Spoilers durch Federn (18) verbunden sind, die den beweglichen Abschnitt in Kontakt mit dem festen Abschnitt zurückholen können und für die Kontinuität des Spoilers sorgen, wenn die Düse (19) nicht mehr mit unter Druck stehendem Waschwasser versorgt wird.

5. Waschvorrichtung nach Anspruch 4, **dadurch gekennzeichnet, dass** der Spoiler (5) zwei identische, parallele Federn (18) aufweist, die an den Seiten der beiden Abschnitte (8, 9) in der Nähe der Führungen (14) angeordnet sind.

6. Waschvorrichtung nach einem der Ansprüche 1 bis 5, **dadurch gekennzeichnet, dass** der feste Abschnitt (8) des Spoilers (5) eine nach außen offene, hohle Aufnahme (26) aufweist, in der die dehnbare Versorgungsleitung (22) eingeschlossen ist, wenn die beiden Spoilerabschnitte miteinander in Kontakt stehen.

7. Waschvorrichtung nach einem der Ansprüche 1 bis 6, **dadurch gekennzeichnet, dass** sie mehrere voneinander unabhängige Düsen (19) aufweist, die in der Querabmessung des beweglichen Abschnitts (9) des Spoilers verteilt und in einer gemeinsamen Verteilungsrampe (20) vereint sind, die mit der dehnbaren Versorgungsleitung (22) verbunden ist.

8. Waschvorrichtung nach einem der Ansprüche 1 bis 7, **dadurch gekennzeichnet, dass** die beiden Abschnitte (8, 9) des Spoilers (5) senkrecht zum Querschlitz Mittel zum gegenseitigen Eingreifen (12, 13) aufweisen, um bei fehlender Versorgung der Düse mit Waschwasser für die Kontinuität des Spoilers zu sorgen.

9. Waschvorrichtung nach einem der Ansprüche 1 bis 8, **dadurch gekennzeichnet, dass** die dehnbare Versorgungsleitung (22) einen Blasebalg (23) aufweist.

10. Waschvorrichtung nach einem der Ansprüche 1 bis 8, **dadurch gekennzeichnet, dass** die dehnbare Versorgungsleitung (22) einen Hydraulikzylinder (23a) aufweist.
